# EUROPÄISCHE PATENTSCHRIFT

(11) **EP 0 399 393 B1**
(45) Veröffentlichungstag und Bekanntmachung des Hinweises auf die Patenterteilung: **25.01.1995**
(21) Anmeldenummer: 90109435.9
(22) Anmeldetag: 18.05.1990
(51) Int. Cl.: B01D 39/02

(54) **Vorrichtung zum Absaugen von mit gasförmigen Verunreinigungen angereicherter Luft aus einem kontaminierten Bodenbereich**
Apparatus for the removal by suction of air enriched with gaseous impurities from an area of contaminated soil
Appareil pour l'aspiration d'air enrichi avec des impuretés gazeuses d'un secteur de sol contaminé

(30) Priorität: 22.05.1989 DE 3916624
(43) Veröffentlichungstag der Anmeldung: 28.11.1990
(73) Patentinhaber: IEG Industrie-Engineering GmbH, D-72770 Reutlingen (DE)
(72) Erfinder: Bernhardt, Bruno, 7410 Reutlingen (DE)
(74) Vertreter: Möbus, Rudolf, Dipl.-Ing.

(56) Entgegenhaltungen:
- EP-A- 0 071 961
- DE-A- 3 403 980
- DE-A- 3 626 145
- DE-U- 8 212 335
- US-A- 3 182 803

## Beschreibung

Die Erfindung betrifft eine Vorrichtung zum Absaugen von mit gasförmigen Verunreinigungen angereicherter Luft aus einem kontaminierten Bodenbereich. Eine solche Vorrichtung ist beispielsweise aus der DE 36 26 145 A1 bekannt.

Es ist bekannt, daß sich im Boden Gase und Flüssigkeiten in ihrer Fortbewegung durch die zwischen den festen Bodenbestandteilen befindlichen Hohlräume gegenseitig behindern können. Hauptursache hierfür ist die in den Bodenhohlräumen auftretende Kapillarwirkung, die sich noch durch die sich an der Oberfläche der festen Bodenteile bildenden Flüssigkeitsschalen erhöht. Diese Behinderung der Gasströme durch vorhandene Flüssigkeiten und Flüssigkeitsströme im Boden wirkt sich auch in Filtereinsätzen aus, die in Bodenöffnungen eingebracht werden, die zum Absaugen von Luft in kontaminierten Bodenbereichen ausgebildet werden. Bei dem dort angewandten Absaugverfahren soll mit wenig Energieaufwand mit gasförmigen Verunreinigungen angereicherte Luft aus dem Bodenbereich durch Unterdruckbildung abgezogen werden, wobei bevorzugt Filtereinsätze zur Erzielung laminarer Luftströme eingesetzt werden. Auch hier kann miteintretendes Grundwasser die Luftströmung behindern und zum Abreißen von Laminarströmen führen.

Aus der DE 34 03 980 A1 ist ein Verfahren zur kontinuierlichen Abscheidung von Aerosolen aus einem Gasstrom bekannt, bei welchem ein elektrostatisch aufladbares Filtermedium eingesetzt wird, an welchem sich die Aerosole niederschlagen. Dort liegt also eine andere Problemstellung vor, nämlich das Abscheiden von Aerosolen.

Aus der EP-A-071 961 ist ein Doppelmantelfilter bekannt, zwischen dessen Filterwandungen Füllkörper eingebracht sind, die ein Eindringen von Sand und Schmutz in das Innere eines Brunnenrohres verhindern sollen. Dabei können die Schüttkörper aus Kunststoffkugeln bestehen, die einen großen Flüssigkeitsdurchlaßquerschnitt in Verbindung mit einer entsprechend gut durchlässigen Ausbildung der Filterwandungen gewährleisten sollen. Dieses Doppelmantelfilter dient also nicht zur Ausscheidung von Flüssigkeiten aus einem Gasstrom und ist dementsprechend auch nicht in Verbindung mit einer darunter befindlichen Flüssigkeitssammelschale eingesetzt. Auch diese Filtervorrichtung dient zur Lösung eines anderen Problems.

Der Erfindung liegt die Aufgabe zugrunde, eine Vorrichtung der eingangs genannten Art so auszubilden, daß in ihrem Filterbereich auftretende Flüssigkeit den Gasdurchsatz durch diesen Bereich so wenig wie möglich behindert.

Die gestellte Aufgabe wird mit den im Hauptanspruch aufgeführten Merkmalen gelöst. Durch die besondere Oberflächenbeschaffenheit der Schüttkörper der Filterfüllung können die sich zwischen den einzelnen Schüttkörpern befindlichen Hohlräume des Filters nicht mit Flüssigkeit vollsetzen. Vielmehr wird die Flüssigkeit zum Abfließen von den Schüttkörpern und damit auch zur laufenden Freigabe der Hohlräume gezwungen, so daß diese Hohlräume für eine gleichmäßige Luftdurchströmung dauernd zur Verfügung stehen. Hierbei können die Schüttkörper vorteilhafterweise aus Kugeln aus Polytetrafluoräthylen bestehen, das unter dem Warenzeichen Teflon bekannt ist.

Mit einer erfindungsgemäß ausgebildeten Vorrichtung wird also eine Phasentrennung zwischen Gas und Flüssigkeit innerhalb des durch Schüttkörper gebildeten Filters erzielt und dadurch bei der erwähnten besonderen Verwendung des Filters als Einsatzfilter in Bodenöffnungen erreicht, daß die in den Kapillaren des Filters auftretenden Gase, insbesondere Luft, durch den in der Bodenöffnung erzeugten Unterdruck leicht abgesaugt werden können, ohne daß hierbei Flüssigkeitstropfen infolge Abriß von Flüssigkeitsschalen von den Schüttkörpern mitgeführt werden. Es versteht sich, daß die Größe der Schüttkörper und damit auch die Größe der zwischen den Schüttkörpern auftretenden Kapillare dem jeweiligen Einsatzzweck entsprechend gewählt werden, also einen ausreichenden Durchströmquerschnitt für die abzusaugende Luft ergeben und einen ausreichend raschen Abfluß der Flüssigkeit aus den Kapillaren unter ihrer Schwerkraft nach unten erlauben.

Nachfolgend wird der Erfindungsgegenstand anhand der beiliegenden Zeichnung näher erläutert:

Im einzelnen zeigen:
- Fig. 1: einen schematischen Querschnitt durch den Schüttkörper eines Filters;
- Fig. 2: ein Einsatzfilter für ein Bohrloch im zentralen schematischen Längsschnitt.

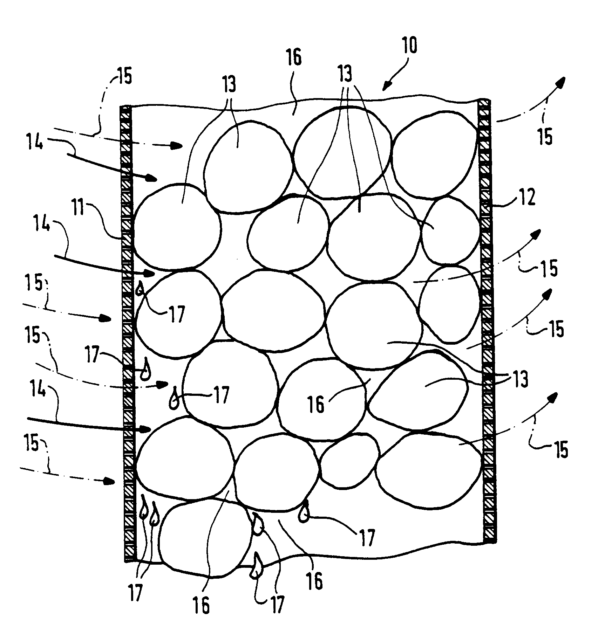

Fig. 1 zeigt einen schematischen Teilschnitt durch einen durch Siebwandungen 11 und 12 auf der Außenseite und der Innenseite begrenzten Filterkörper 10. Seine Schüttkörperfüllung besteht aus Kugeln 13 aus Polytetrafluoräthylen (Teflon) gleicher oder unterschiedlicher Größe.

Mit dicken Pfeilen 14 ist von der Außenseite her durch die Siebwandung 11 einströmende Flüssigkeit angedeutet. Mit dünnen strichpunktierten Pfeilen 15 sind einströmende Gase angedeutet. Die Oberfläche der Kunststoffkugeln 13 verhindert ein Anhaften von Flüssigkeit und die sonst übliche Ausbildung von Flüssigkeitsschalen an den Schüttkörpern. Die Durch die äußere Siebwandung 11 eindringende Flüssigkeit läuft daher an der Oberfläche der Kunststoffkugeln 13 ab und verdichtet sich zu Tropfen 17, die durch die zwischen den Kunststoffkugeln 13 vorhandenen Kapillarräume 16 hindurch nach unten abtropfen und schließlich unten aus dem Filterkörper 10 auslaufen. In den zwischen den Kunststoffkugeln 13 befindlichen Kapillarräumen 16 kann sich also keine Flüssigkeit festsetzen, und ein ungehinderter Durchfluß der Gasströme 15 durch den Filterkörper 10 und durch die innere Siebwandung 12 hindurch ist gewährleistet.

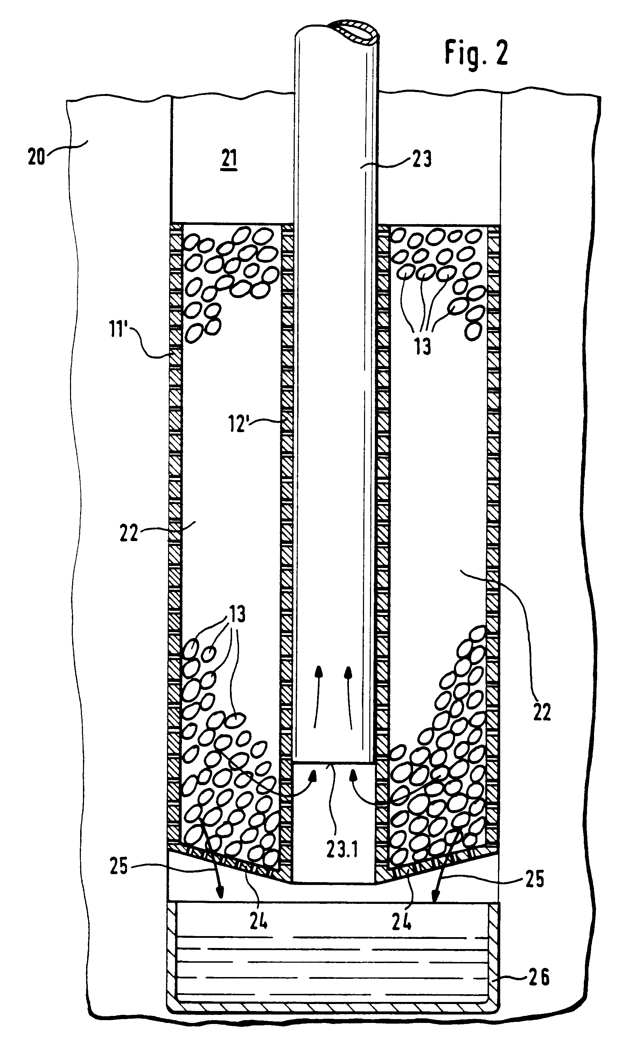

Fig. 2 zeigt einen in verunreinigtes Erdreich 20 eingetriebenen Bohrschacht 21, in welchen ein mit Kunststoffkugeln 13 gefüllter Filterring 22 eingesetzt ist. Der Filterring 22 ist nach außen durch eine Siebwandung 11′ und nach innen durch eine Siebwandung 12′ begrenzt. Ein Absaugrohr 23 ist in das Bohrloch 21 und bis in das Innere des Filterringes 22 konzentrisch eingesetzt. Durch sein Ende 23.1 wird mittels eines nicht dargestellten Ventilators Luft abgesaugt. Der Filterring 22 ist auf seiner Unterseite mittels einer Siebwandung 24 verschlossen, durch welche die durch die äußere Siebwandung 11′ einströmende und im Filterkörper auf die in Verbindung mit Fig. 1 beschriebene Weise abgeleitete Flüssigkeit in Richtung der eingezeichneten Pfeile 25 nach unten ausfließen kann. Unterhalb des eingesetzten Filterringes 22 ist im Bohrloch 21 in Flüssigkeitssammeltopf 26 eingesetzt, aus welchem die Flüssigkeit mittels eines nicht dargestellten Absaugschlauches, der durch das Absaugrohr 23 hindurchgeleitet sein kann, von Zeit zu Zeit oder laufend abgesaugt werden kann.

## Patentansprüche

1. Vorrichtung zum Absaugen von mit gasförmigen Verunreinigungen angereicherter Luft aus einem kontaminierten Bodenbereich (20),
die zum Einsatz in eine Bodenöffnung (21) ausgebildet ist und
ein Filter (10) mit einer eine laminare Luftströmung gewährleistenden Schüttkörperfüllung sowie eine darunter angeordnete Flüssigkeitssammelschale (26) aufweist,
und die Schüttkörper (13) mindestens teilweise eine Flüssigkeitsschalenbildung verhindernde, hydrophobe Oberfläche aufweisen.

2. Vorrichtung nach Anspruch 1, dadurch gekennzeichnet, daß die eine hydrophobe Oberfläche aufweisenden Schüttkörper Kugeln (13) aus Polytetrafluoräthylen sind.

3. Vorrichtung nach Anspruch 1 oder 2, dadurch gekennzeichnet, daß das Filter als die Schüttkörperfüllung aufweisender Filterring (22) ausgebildet ist, der koaxial zu der unterhalb befindlichen Flüssigkeitssammelschale (26) angeordnet ist.

## Claims

1. A device for vacuuming air enriched with gaseous impurities from an area of contaminated soil (20),
which is designed for use in a ground opening (21), and
comprising a filter (10) with a bulk filling which ensures a laminar airflow and thereunder a liquid-collecting vessel (26), and
the bulk material (13) has at least partially a hydrophobic surface which prevents the formation of a liquid shell.

2. A device according to claim 1, **characterised in that** the bulk material with a hydrophobic surface are balls (13) of polytetrafluorethylene.

3. A device according to claim 1 or 2, **characterised in that** the filter is a filter ring (22) comprising the bulk filling, which is arranged coaxially relative to the liquid-collecting vessel which is arranged thereunder.

## Revendications

1. Appareil pour l'aspiration d'air enrichi avec des impuretés gazeuses d'un secteur de sol contaminé (20),
qui est conçu pour utilisation dans une ouverture de sol (21)
et présente un filtre (10) avec un remplissage de produits en vrac garantissant un écoulement d'air laminaire ainsi qu'une cuvette de collecte de liquide (26) disposée au-dessous de celui-ci,
et les produits en vrac (13) présentent au moins partiellement une surface hydrophobe, empêchant la formation d'une cuvette de liquide.

2. Appareil selon la revendication 1, caractérisé en ce que les produits en vrac présentant une surface hydrophobe sont des boules (13) en polytétrafluoréthylène.

3. Appareil selon la revendication 1 ou 2, caractérisé en ce que le filtre est conçu comme anneau filtrant (22) présentant le remplissage de produits en vrac, qui est disposé coaxialement à la cuvette de collecte de liquide (26) se trouvant au-dessous.
